# EUROPEAN PATENT APPLICATION

(11) **EP 4 852 386 A1**
(43) Date of publication of application: **09.12.2026**
(21) Application number: 24923546.6
(22) Date of filing: 19.12.2024
(51) Int. Cl.: H04L 41/0677

(54) **FAULT IDENTIFICATION METHOD, ELECTRONIC DEVICE, AND COMPUTER-READABLE STORAGE MEDIUM**

(30) Priority: 07.02.2024 CN 202410174339
(71) Applicant: ZTE CORPORATION, Shenzhen, Guangdong 518057 (CN)
(72) Inventor: HUANG, Xiaogu, Shenzhen, Guangdong 518057 (CN)
(74) Representative: Canzler & Bergmeier Patentanwälte Partnerschaft mbB
(86) International application number: PCT/CN2024/140563
(87) International publication number: WO 2025/167344

(57) **Abstract**

The present disclosure relates to the technical field of communications, and provides a fault identification method, an electronic device, and a computer-readable storage medium. The fault identification method comprises: acquiring network anomaly data, and upon determining, on the basis of the network anomaly data, that a fault has occurred, acquiring target network data; on the basis of the target network data, acquiring an inspection entry list, and acquiring topological relationships of network devices associated with the target network data; on the basis of the topological relationships and the inspection entry list, acquiring communication network management data, and, on the basis of the acquired communication network management data, determining an inspection result for each entry in the inspection entry list; and on the basis of the inspection results, generating a state mode vector corresponding to each network device, and, on the basis of the state mode vector, determining a fault identification result.

## Description

### CROSS REFERENCE TO RELATED APPLICATIONS

The present disclosure claims the priority to Chinese Patent Application No. 202410174339.7 filed on February 7, 2024, the contents of which are incorporated herein by reference in their entirety.

### TECHNICAL FIELD

The present disclosure relates to the technical field of communications, and in particular, to a fault identification method, an electronic device, and a computer-readable storage medium.

### BACKGROUND

With rapid development of communication networks, customer requirements become higher and higher, and tolerance to network faults is relatively low.

Fault demarcation in the communication networks in related technology mostly depends on experts to perform manual analysis on data of FCAPS (which is a common term in the field of network management, refers to five key aspects of overall management on the communication networks, and includes Fault Management, Configuration Management, Accounting Management, Performance Management, and Security Management) to obtain a demarcation conclusion, which takes long analysis time.

A plurality of network support systems are provided in a communication network and have different functions, and in response to a fault occurring, operation and maintenance staff are usually required to acquire data from the plurality of systems for positioning the fault. Due to an incomplete topological relationship of the network support systems, it is difficult to establish a comprehensive fault topological relationship.

For guaranteeing quality of the communication network and improving experiences of a user using the communication network, it is great important to improve efficiency of handling a fault in the network.

### SUMMARY

In a first aspect of the present disclosure, there is provided a fault identification method, including: acquiring network anomaly data, and acquiring target network data in response to determining a fault occurring based on the network anomaly data; acquiring a check item list based on the target network data, and acquiring a topological relationship of each network device associated with the target network data; acquiring communication network management data based on the topological relationship and the check item list, and determining a check result of each item in the check item list based on the acquired communication network management data, the check result of each item being obtained by detecting the acquired communication network management data using the item and configured to indicate whether an anomaly is detected; generating a state mode vector corresponding to each network device based on the check result, and determining a fault identification result based on the state mode vector, the fault identification result being configured to indicate the network device having the fault.

In a second aspect of the present disclosure, there is provided an electronic device, including: at least one processor; a storage device having stored therein at least one computer program which, when executed by the at least one processor, causes the at least one processor to implement the method described in the first aspect; and at least one input/output (I/O) interface, connected between the at least one processor and the storage device and configured to enable information interaction between the at least one processor and the storage device.

In a third aspect of the present disclosure, there is provided a computer-readable storage medium having stored therein a computer program which, when executed by a processor, causes the processor to implement the method described in the first aspect.

### BRIEF DESCRIPTION OF DRAWINGS

FIG. 1 is a flowchart illustrating a fault identification method according to the present disclosure;
FIG. 2 is a schematic diagram illustrating a process of training a neural network model according to the present disclosure;
FIG. 3 is a schematic diagram illustrating a specific process of fault demarcation according to the present disclosure;
FIG. 4 is a schematic structural diagram of a fault identification apparatus according to the present disclosure;
FIG. 5 is a schematic structural diagram of a fault identification apparatus according to the present disclosure;
FIG. 6 is a schematic structural diagram of an electronic device according to the present disclosure.

### DETAILED DESCRIPTION OF EMBODIMENTS

The specific implementations of embodiments of the present disclosure are described in detail below with reference to the drawings. It should be understood that the specific implementations described herein are merely intended to describe and explain the present disclosure, rather than limiting the present disclosure.

The term "and/or" used herein includes any and all combinations of at least one associated listed item.

The terms used herein are merely used to describe the specific implementations, and are not intended to limit the present disclosure. As used herein, "a" and "the" which indicate a singular form are intended to include a plural form, unless expressly stated otherwise in the context.

The term(s) "include" and/or "be made of" used herein indicate(s) the presence of the specified features, integers, operations, elements and/or components, but do not exclude the presence or addition of at least one of other features, integers, operations, elements, components and/or combinations thereof.

Unless otherwise defined, all terms (including technical and scientific terms) used herein have the same meaning as commonly understood by those of ordinary skill in the art. It should be further understood that the terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

The present disclosure provides a fault identification method, which is applicable to any electronic device. The fault identification method provided by the present disclosure is applicable to network fault demarcation of a Core Network, and is also applicable to fault demarcation of network devices in other scenarios.

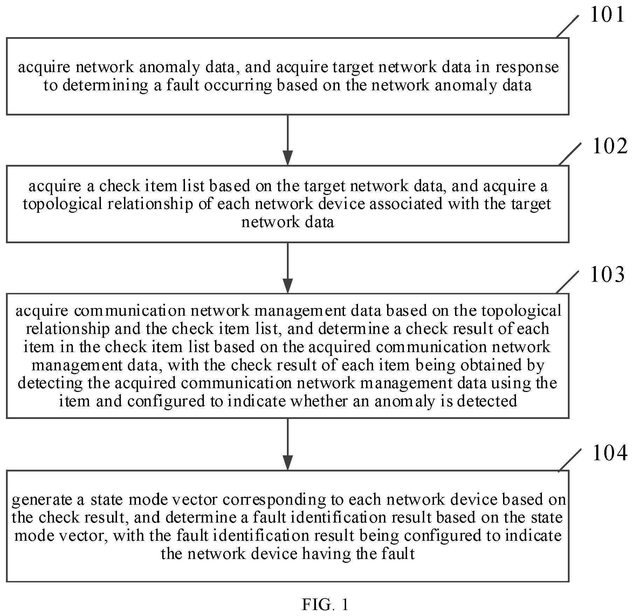

FIG. 1 is a flowchart illustrating a fault identification method according to the present disclosure, and the fault identification method includes following operations 101 to 104.

At operation 101, network anomaly data is acquired, and target network data is acquired in response to determining a fault occurring based on the network anomaly data.

In some implementations, the network anomaly data includes at least one of: alarm data; or abnormal performance data.

In some implementations, acquiring the target network data in response to determining the fault occurring based on the network anomaly data includes: determining whether a network fault is identified based on a preconfigured fault identification rule and the network anomaly data monitored, determining an occurrence time of the network fault in response to identifying the network fault, and acquiring data before and after the occurrence time of the network fault as the target network data.

The data before and after the occurrence time of the network fault includes network data acquired within a first preset duration before the occurrence time of the network fault and network data acquired within a second preset duration after the occurrence time of the network fault.

The occurrence time of the network fault may be determined based on a generation time or an acquisition time of the network anomaly data, and the network anomaly data is network data serving as a basis for determining the network fault occurring. For example, the generation time of the network anomaly data serving as a basis for determining the network fault occurring is directly taken as the occurrence time of the network fault; alternatively, the acquisition time of the network anomaly data serving as a basis for determining the network fault occurring is directly taken as the occurrence time of the network fault.

In some implementations, before acquiring the network anomaly data, the fault identification method further includes: configuring the fault identification rule in advance, the fault identification rule being formulated based on the network anomaly data and a fault type, and after the network anomaly data is monitored, whether the fault occurs is determined based on the fault identification rule and the monitored network anomaly data.

The fault identification rule includes, but is not limited to, at least one of: alarm data in the acquired network anomaly data meeting a preset condition, for example, an alarm code or an alarm code of a specified type being acquired; the number of occurrences of alarm data per unit time in the acquired network anomaly data reaching a threshold, with the unit time being set as agreed, for example, set as hour, month, or half a year; performance data in the acquired network anomaly data exceeding a predefined threshold.

At operation 102, a check item list is acquired based on the target network data, and a topological relationship of each network device associated with the target network data is acquired.

In some implementations, the check item list (also referred to as a checklist) includes at least one item, and each item includes a check item and a check rule corresponding to the check item.

The check item includes a category of network data to be checked.

The check rule includes a rule for determining whether the network data corresponding to the check item is abnormal.

For example, the check item includes at least one of following categories: alarms, performance, configurations, and logs.

The check rule corresponding to the check item includes, but is not limited to, determining whether the network data corresponding to the check item is within a range limited by a fixed threshold (for example, whether the network data is less than the fixed threshold or is greater than the fixed threshold), which is also referred to as a fixed threshold check rule; determining whether a difference between the network data corresponding to the check item and a historical reference value is within a set range, which is also referred to as a historical reference check rule; determining whether a difference between the network data corresponding to the check item and an average is within a set range, which is also referred to as an average check rule; determining whether an association analysis result of the network data corresponding to the check item and other network data meets a set condition, which is also referred to as an association analysis check rule.

In some implementations, acquiring the check item list based on the target network data includes: determining a fault type corresponding to the target network data; acquiring the check item list corresponding to the determined fault type based on a pre-configured mapping relationship between the fault type and the check item list. In the implementations, by preliminarily identifying the fault type and acquiring the check item list corresponding to the fault type, the acquired check item list is adapted to the preliminarily identified fault type, which ensures adaptability of the check item list, and provides a basis for efficiently identifying the fault.

In some implementations, the target network data is acquired by accessing to a plurality of systems, fault identification is performed based on the acquired target network data, to preliminarily determine the fault type, and correspondingly acquire the check item list based on the fault type.

In some implementations, acquiring the topological relationship of each network device associated with the target network data includes: determining at least one first network device to which the target network data belongs; acquiring at least one second network device associated with the first network device through a network management system, and acquiring a connection relationship between each first network device and each second network device through the network management system; determining the topological relationship of each network device associated with the target network data based on the connection relationship between each first network device and each second network device.

The topological relationship of each network device associated with the fault is established based on the target network data, so that fault-associated upstream and downstream devices are comprehensively considered, a coverage of fault demarcation is improved, and a support for quickly and accurately identifying the fault is provided.

In some implementations, information is acquired from the network management system based on information of a device to which the network anomaly data such as alarms and performance belongs, to establish a topological relationship corresponding to a faulty device, including a topological relationship from a network element to a virtual machine, a topological relationship from the virtual machine to a host, a topological relationship from the host to a switch, and a topological relationship from the switch to a router.

The network management system includes an element management system and a network management layer system.

At operation 103, communication network management data is acquired based on the topological relationship and the check item list, and a check result of each item in the check item list is determined based on the acquired communication network management data, with the check result of each item being obtained by detecting the acquired communication network management data using the item and configured to indicate whether an anomaly is detected.

In some implementations, acquiring the communication network management data based on the topological relationship and the check item list includes: acquiring the communication network management data from the network management system based on the check item list and a connection relationship between the network devices in the topological relationship, the acquired communication network management data being target data for at least one item in the check item list, and belonging to at least one network device in the topological relationship or a device having a connection relationship with at least one network device in the topological relationship.

The communication network management system includes data related to various management functions, including fault management data, configuration management data, accounting management data, performance management data, and security management data, i.e., FCAPS data.

In some implementations, acquiring the communication network management data from the network management system based on the check item list and the connection relationship between the network devices in the topological relationship includes: acquiring the check item included in each item in the check item list; acquiring the communication network management data from the data related to various management functions in the network management system based on the check item and the connection relationship between the network devices in the topological relationship.

There are following two cases based on different sources of the data corresponding to the check item.

In one case, the data corresponding to the check item is from one network device, the communication network management data matched with the check item is directly acquired from the data related to various management functions in the network management system.

In another case, the data corresponding to the check item is from a network device and upstream and downstream devices of the network device, the upstream and downstream devices of the network device are searched for based on the connection relationship between the network devices in the topological relationship, and the communication network management data matched with the check item is acquired from the data related to various management functions in the network management system based on information of the upstream and downstream devices of the network device.

For example, in response to the check item including a configuration item A of a network device 1 and a configuration item B of an upper-layer device of the network device 1, the upper-layer device of the network device 1, i.e., a network device 2, is searched for based on the connection relationship between the network devices, and for the check item, data of the configuration item A of the network device 1 and data of the configuration item B of the network device 2 are acquired from the data related to various management functions in the network management system.

In some implementations, the communication network management data in the network management system includes the FCAPS data, including Fault Management data, Configuration Management data, Accounting Management data, Performance Management data, and Security Management data.

In some implementations, determining the check result of each item in the check item list based on the acquired communication network management data includes respectively performing following processing on each network device included in the topological relationship: for each item in the check item list, acquiring target data corresponding to the item from the communication network management data corresponding to the network device, and processing the target data by using the check rule included in the item to generate the check result corresponding to the item.

In some implementations, the check item list includes items at a plurality of levels such as a network element level, a virtual machine level, a host level, a switch level, and a storage pool level.

In some implementations, before determining the check result of each item in the check item list based on the acquired communication network management data, the fault identification method further includes: cleaning the acquired communication network management data, including clearing duplicate alarms, clearing duplicate logs, removing invalid data, and removing discontinuous time-series data.

At operation 104, a state mode vector corresponding to each network device is generated based on the check result, and a fault identification result is determined based on the state mode vector, with the fault identification result being configured to indicate the network device having the fault.

In some implementations, determining the fault identification result based on the state mode vector includes: inputting the state mode vector into a pre-trained neural network model to obtain the fault identification result

In some implementations, generating the state mode vector corresponding to each network device based on the check result includes: for the network device, acquiring the check result of each item in the check item list corresponding to the network device to obtain a target check result set, determining a state value corresponding to each target check result in the target check result set, and generating the state mode vector corresponding to the network device based on the state value corresponding to each target check result, the check result of each item being configured to indicate whether the item has the fault.

In some implementations, the check result of each item in the check item list is acquired based on the check rule corresponding to the item, and the state mode vector is constructed based on the check result, and is expressed as follows: ${P}_{i , j} = \left\{\begin{matrix}1 & {x}_{i , j} is normal \\ - 1 & {x}_{i , j} is abnormal\end{matrix}.\right.$

P_{i,j} denotes a state value corresponding to a check result of a check item j of a device i, and P = [P_{i,1}, . . . P_{i,m}] denotes a complete state mode vector of the device i.

In some implementations, a process of obtaining the neural network model includes: acquiring a training sample set including historical normal data and historical fault data of the network devices, with the historical normal data being the communication network management data acquired in a normal operation state of the network devices, and the historical fault data being the communication network management data acquired before and after the occurrence time of the network fault; training an initial neural network model by adopting the training sample set until the initial neural network model converges, thereby obtaining the final neural network model.

In some implementations, the neural network model is obtained by being trained based on historical data by a self-learning algorithm.

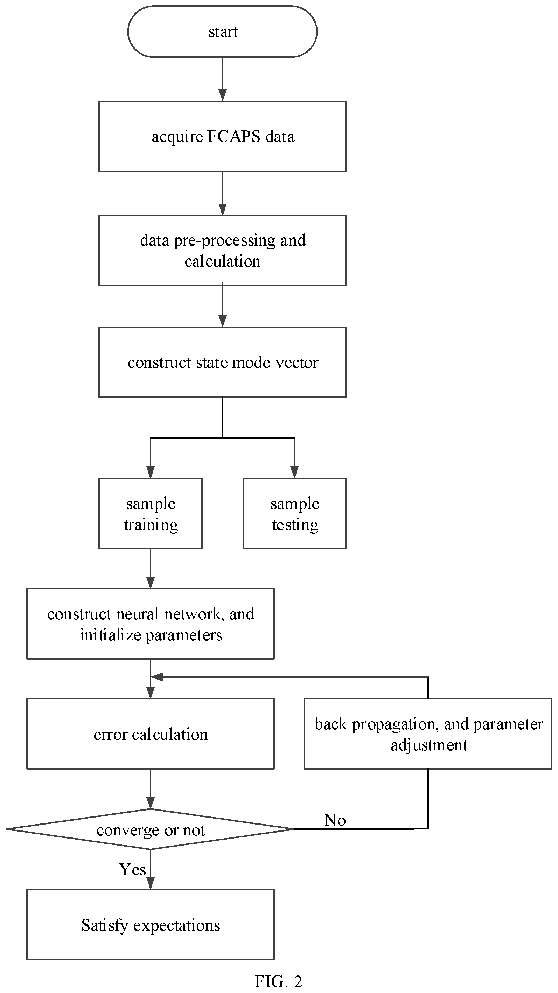

FIG. 2 is a schematic diagram illustrating a process of training a neural network model, and the process of training mainly includes following procedures.

Data of the network devices in a historical normal state, and FCAPS data of the network devices around a plurality of historical occurrence times of faults are acquired, with the network devices including virtual machines, hosts, switches, and the like.

The acquired FCAPS data is cleaned, by clearing duplicate alarms, clearing duplicate logs, removing invalid data or the like.

A part of cleaned data samples are randomly selected as training samples, and the rest of the cleaned data samples are taken as test samples.

Based on the check rule corresponding to each item in the check item list, the check result corresponding to each item is obtained by a calculation based on the training samples, and the state mode vector is constructed based on the check result, and is expressed as follows: ${P}_{i , j} = \left\{\begin{matrix}1 & {x}_{i , j} is normal \\ - 1 & {x}_{i , j} is abnormal\end{matrix}.\right.$

P_{i,j} denotes a state value of an item j of a device i, and P = [P_{i,1}, . . . P_{i,m}] denotes a complete state mode vector of the device i. Features can be extracted more conveniently after the data is normalized, and the state mode vector is subsequently used as a representation vector of the device to be learned.

During the neural network model being trained by adopting a deep learning method, i.e., the self-learning method, self-learning may be performed by adopting a stacked denoising autoencoder. The stacked denoising autoencoder is a deep neural network model including a plurality of autoencoders, and is to be trained layer by layer and finely tuned to become the neural network model satisfying expectations.

Taking a simple structure of three layers of autoencoders as an example, each layer of autoencoder includes an input layer, a hidden layer, and an output layer, an encoder is from the input layer to the hidden layer, and a decoder is from the hidden layer to the output layer. Generally, the number of neurons of the hidden layer is much less than that of the input layer, therefore, input data may be represented by fewer features, thereby reducing dimensions. Each layer of autoencoder is trained in an unsupervised manner as follows: for sample data P input into the input layer, the sample data P is first encoded, $Y = f \left({W}_{1}P+{b}_{1}\right) .$

W₁ is a weight, b₁ is a bias, and Y is a value obtained by the layer of autoencoder encoding an input sample, i.e., is an output of the hidden layer.

Then, the value obtained by encoding is reconstructed into data, $\overline{P} = f \left({W}_{2}Y+{b}_{2}\right) .$

W₁, W₂, b₁, and b₂ are network parameters of the autoencoder.

Noise is introduced into the input sample during the training to increase robustness of the encoding.

A training objective of the autoencoder is to make the reconstructed data and the input sample data as similar as possible. For extracting main features and ensuring the training objective, an objective function may be expressed as: $L = \frac{1}{m} {\sum }_{i = 1}^{m} {\left(P-\overline{P}\right)}^{2} .$

The m denotes the number of pieces of input sample data.

The weight and configuration of the neural network model are adjusted by a Back Propagation algorithm (BP algorithm), it is indicated that the training of the layer is completed in response to the neural network model converging, and the training of a next layer is to be performed after the network parameters are fixed.

In the process of training the stacked denoising autoencoder, after training a first layer of autoencoder by adopting above procedures is completed, parameters and a result of the hidden layer in the first layer of autoencoder are fixed, and the output layer in the first layer of autoencoder and the corresponding weight and bias are removed; the result of the hidden layer is used as an input to a second layer of autoencoder, parameters and a result of the hidden layer in the second layer of autoencoder are fixed after training the second layer of autoencoder by adopting the above procedures is completed, and the output layer in the second layer of autoencoder and the corresponding weight and bias are removed; and so on, until parameters and a result of the hidden layer in the last layer of autoencoder are obtained, the output layer in the last layer of autoencoder and the corresponding weight and bias are removed, a classifier is added after the hidden layer in the last layer of autoencoder to obtain an entire architecture of the neural network model, and network parameters of the entire neural network model are then finely tuned by referring to labeled sample data, to enable the classifier to output vectors for indicating categories, with the labeled sample data including state mode vectors of the network devices and pre-labeled states of the network devices, and the vectors output by the classifier being configured to indicate states of the network devices.

After the neural network model is trained, the parameters of the neural network model are finely tuned by a global fine-tuning via the BP algorithm, that is, the entire network is trained by the BP algorithm to fine-tune the parameters.

The test samples are input into the trained neural network model, and fault diagnosis is performed by the neural network model.

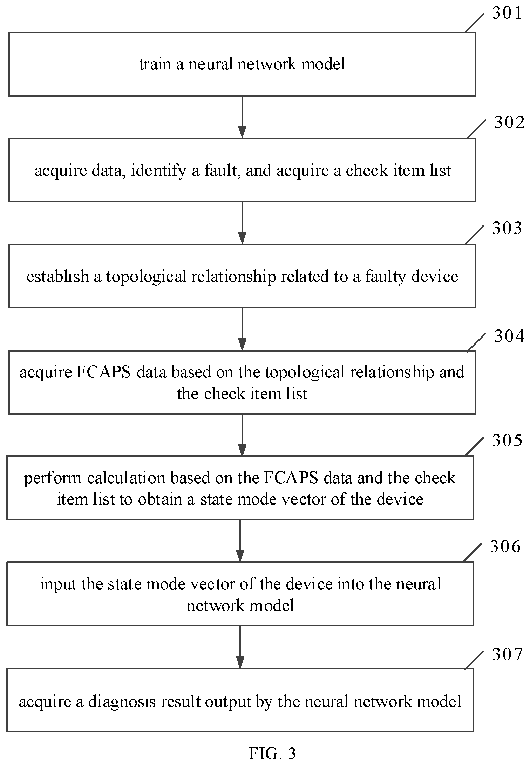

In an example, as shown in FIG. 3 illustrating an example of a specific process of fault demarcation, the process of fault demarcation mainly includes following operations 301 to 307.

At operation 301, training a neural network model.

At operation 302, acquiring data, identifying a fault, and acquiring a check item list.

At operation 303, establishing a topological relationship related to a faulty device.

At operation 304, acquiring FCAPS data based on the topological relationship and the check item list.

At operation 305, performing a calculation based on the FCAPS data and the check item list to obtain a state mode vector of the device.

At operation 306, inputting the state mode vector of the device into the neural network model.

At operation 307, acquiring a diagnosis result output by the neural network model.

According to the present disclosure, by acquiring the target network data in response to determining the fault occurring based on the network anomaly data, acquiring the check item list associated with the target network data and the topological relationship of each network device, and acquiring the communication network management data based on the topological relationship and the check item list, the communication network management data can be intelligently acquired based on the preliminarily acquired target network data without any manual intervention, which obviates the need for operation and maintenance staff to manually acquire data from a plurality of systems for positioning the fault, reduces manual operations, and improves efficiency of acquiring the communication network management data, and facilitates improving the efficiency of fault identification. Moreover, by determining the check result of each item in the check item list based on the acquired communication network management data, and generating the state mode vector corresponding to each network device based on the check result, the state of each network device associated with the network fault is obtained, and the fault identification result is output, so that the fault can be quickly identified based on the state of the network device associated with the fault, which can quickly realize fault demarcation, shorten the time for fault demarcation, improve the accuracy of demarcation, reduce the cost for fault demarcation, improve the efficiency of fault identification, and improve the efficiency of handling the fault.

With the fault identification method provided in the present disclosure, faults can be found actively by monitoring, fault points are demarcated by an analysis based on data from a plurality of data sources, the acquired data are strongly correlated with the faults, thereby avoiding an acquisition of a large amount of irrelevant data. Compared with the related technology, the acquired data is more comprehensive, and the topological relationship of the network is clearer.

The above division of operations of the method is just for clarity of description, and during implementing the operations, the operations may be combined into one operation, or a certain operation may be divided into a plurality of operations. As long as the implementations of the operations include the same logical relationship, the implementations of the operations are all within the scope of the present disclosure. All insignificant modifications added or insignificant designs introduced into the algorithms or processes are all within the scope of the present disclosure, as long as the insignificant modifications and the insignificant designs do not change core designs of the algorithms or processes.

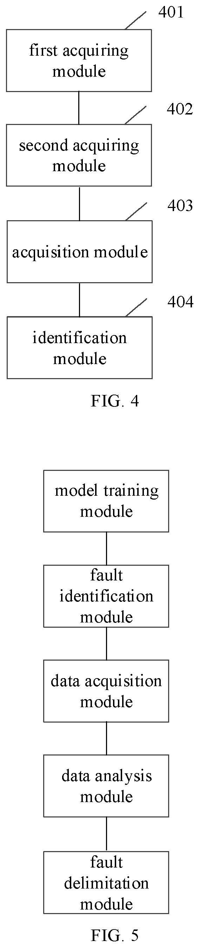

The present disclosure provides a fault identification apparatus, and a specific implementation of the apparatus can be found in the above related description of implementations of the method, and will not be repeated here. FIG. 4 is a schematic structural diagram of the apparatus, and as shown in FIG. 4, the apparatus mainly includes: a first acquiring module 401, a second acquiring module 402, an acquisition module 403, and an identification module 404.

The first acquiring module 401 is configured to acquire network anomaly data, and acquire target network data in response to determining a fault occurring based on the network anomaly data.

The second acquiring module 402 is configured to acquire a check item list based on the target network data, and acquire a topological relationship of each network device associated with the target network data.

The acquisition module 403 is configured to acquire communication network management data based on the topological relationship and the check item list, and determine a check result of each item in the check item list based on the acquired communication network management data, with the check result of each item being obtained by detecting the acquired communication network management data using the item and configured to indicate whether an anomaly is detected.

The identification module 404 is configured to generate a state mode vector corresponding to each network device based on the check result, and determine a fault identification result based on the state mode vector, with the fault identification result being configured to indicate the network device having the fault.

In an example, FIG. 5 is a schematic structural diagram of a fault identification apparatus, and as shown in FIG. 5, the apparatus includes: a model training module, a fault identification module, a data acquisition module, a data analysis module, and a fault demarcation module.

The model training module is configured to train a neural network model for fault identification.

The fault identification module includes a first acquiring module 401 configured to acquire target network data and initially identify a fault type.

The data acquisition module includes a second acquiring module 402 and an acquisition module 403, and is configured to acquire a check item list based on the initially identified fault type, acquire a topological relationship of each network device associated with network fault data, acquire communication network management data based on the topological relationship and the check item list, and determine a check result of each item in the check item list based on the acquired communication network management data.

An identification module 404 includes the data analysis module and the fault demarcation module, the data analysis module is configured to generate a state mode vector corresponding to each network device based on the check result, and the fault demarcation module is configured to input the state mode vector corresponding to the network device into the pre-trained neural network model to obtain the fault identification result.

The functions or modules of the apparatus provided in the present disclosure may be used to perform the method described in the implementations of the method, and the specific implementations and technical effects can be found in the above description of implementations of the method, and will not be described here for conciseness.

It should be noted that each module in the implementations is a logic module, and in practical applications, one logical unit may be one physical unit or a part of one physical unit, and may also be implemented as a combination of a plurality of physical units. In addition, in order to highlight the innovative part of the present disclosure, a unit not so closely related to the solution to solve the technical problem proposed by the present disclosure is not introduced into the implementations, which does not mean that no other unit is provided in the implementations.

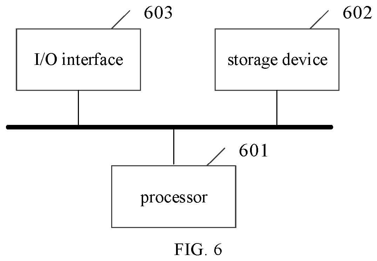

Referring to FIG. 6, an embodiment of the present disclosure provides an electronic device, including: at least one processor 601; a storage device 602 having stored therein at least one computer program which, when executed by the at least one processor, causes the at least one processor to implement the method described above; at least one I/O interface 603 connected between the processor 601 and the storage device 602, and configured to enable information interaction between the processor 601 and the storage device 602.

The processor 601 is a device having a data processing capability, and includes, but is not limited to, a Central Processing Unit (CPU); the storage device 602 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); the I/O interface (read/write interface) 603 is connected between the processor 601 and the storage device 602, is capable of enabling the information interaction between the processor 601 and the storage device 602, and includes, but is not limited to, a data bus (Bus).

In some implementations, the processor 601, the storage device 602, and the I/O interface 603 are connected to each other through a bus, and then are connected to other components of a computing device.

The present disclosure further provides a computer-readable storage medium having stored therein a computer program which, when executed by a processor, causes the processor to implement the method according to the present disclosure. In order to avoid repeated description, the detailed operations of the method will not be repeated here.

It should be understood by those of ordinary skill in the art that the functional modules/units in all or some of the operations, the system or apparatus disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor (such as a CPU, a digital signal processor or a microprocessor), or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/non-volatile and removable/non-removable medium used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication medium generally includes computer-readable instructions, data structures, program modules, or other data in modulated data signals such as carriers or other transmission mechanisms, and may include any information delivery medium.

It should be noted that the terms "include", "comprise" or any other variation thereof are intended to indicate a non-exclusive inclusion, so that a process, method, article, or device, which includes a series of elements, does not only include those listed elements but also include other elements which are not explicitly listed, or the elements inherent in such process, method, article, or device. If there are no more limitations, limiting an element by "including one..." does not exclude the existence of other identical elements in the process, method, article, or device which includes the element.

It should be understood by those of ordinary skill in the art that, although some embodiments described herein include some features, rather than other features included in other embodiments, the combinations of the features of different embodiments are intended to fall within the scope of the present disclosure and form different embodiments.

It should be understood that the above implementations are merely exemplary implementations adopted to illustrate the principle of the present disclosure, and the present disclosure is not limited thereto. Various modifications and improvements can be made by those of ordinary sill in the art without departing from the spirit and essence of the present disclosure, and those modifications and improvements are considered to fall within the scope of the present disclosure.

## Claims

1. A fault identification method, comprising:
acquiring network anomaly data, and acquiring target network data in response to determining a fault occurring based on the network anomaly data;
acquiring a check item list based on the target network data, and acquiring a topological relationship of each network device associated with the target network data;
acquiring communication network management data based on the topological relationship and the check item list, and determining a check result of each item in the check item list based on the acquired communication network management data, wherein the check result of each item is obtained by detecting the acquired communication network management data using the item, and is configured to indicate whether an anomaly is detected;
generating a state mode vector corresponding to each network device based on the check result, and determining a fault identification result based on the state mode vector, wherein the fault identification result is configured to indicate the network device having the fault.

2. The method of claim 1, wherein the network anomaly data comprises at least one of: alarm data; or abnormal performance data.

3. The method of claim 1, wherein acquiring the check item list based on the target network data comprises:
determining a fault type corresponding to the target network data;
acquiring the check item list corresponding to the determined fault type based on a pre-configured mapping relationship between the fault type and the check item list.

4. The method of claim 1, wherein acquiring the topological relationship of each network device associated with the target network data comprises:
determining at least one first network device to which the target network data belongs;
acquiring at least one second network device associated with the first network device through a network management system, and acquiring a connection relationship between each first network device and each second network device through the network management system;
determining the topological relationship of each network device associated with the target network data based on the connection relationship between each first network device and each second network device.

5. The method of claim 4, wherein acquiring the communication network management data based on the topological relationship and the check item list comprises:
acquiring the communication network management data from the network management system based on the check item list and a connection relationship between network devices in the topological relationship;
wherein the acquired communication network management data is target data for at least one item in the check item list, the acquired communication network management data belongs to at least one network device in the topological relationship or a device having a connection relationship with at least one network device in the topological relationship.

6. The method of claim 1, wherein determining the check result of each item in the check item list based on the acquired communication network management data comprises respectively performing following processing on each network device included in the topological relationship:
for each item in the check item list, acquiring target data for the item from the communication network management data corresponding to the network device, and processing the target data by using a check rule included in the item to generate the check result corresponding to the item.

7. The method of any one of claims 1 to 6, wherein generating the state mode vector corresponding to each network device based on the check result comprises:
for the network device, acquiring the check result of each item in the check item list corresponding to the network device to obtain a target check result set, determining a state value corresponding to each target check result in the target check result set, and generating the state mode vector corresponding to the network device based on the state value corresponding to each target check result.

8. The method of claim 7, wherein determining the fault identification result based on the state mode vector comprises:
inputting the state mode vector into a pre-trained neural network model to obtain the fault identification result.

9. An electronic device, comprising:
at least one processor;
a storage device having stored therein at least one computer program which, when executed by the at least one processor, causes the at least one processor to implement the method of any one of claims 1 to 8;
at least one input/output (I/O) interface, connected between the at least one processor and the storage device and configured to enable information interaction between the at least one processor and the storage device.

10. A computer-readable storage medium having stored therein a computer program which, when executed by a processor, causes the processor to implement the method of any one of claims 1 to 8.
